# EUROPEAN PATENT APPLICATION

(11) **EP 1 128 579 A1**
(43) Date of publication of application: **29.08.2001**
(21) Application number: 99929881.3
(22) Date of filing: 16.07.1999
(51) Int. Cl.: H04B 10/08, H04B 3/46, H04B 10/16, H01S 3/10, H04J 14/02

(54) **METHOD AND APPARATUS FOR OPTICAL COMMUNICATION MONITORING, OPTICAL AMPLIFIER SYSTEM, METHOD OF CONTROLLING OPTICAL AMPLIFIER SYSTEM, AND OPTICAL COMMUNICATION SYSTEM**

(30) Priority: 06.11.1998 JP 31652398
(71) Applicant: Sumitomo Electric Industries, Ltd., Osaka-shi, Osaka 541-0041 (JP)
(72) Inventor: NAKAZATO, Koji, Sakae-ku, Yokohama-shi, Kanagawa 244-858 (JP)
(74) Representative: HOFFMANN - EITLE
(86) International application number: PCT/JP99/03857
(87) International publication number: WO 00/28681

(57) **Abstract**

There is provided a CDMA mobile communication system in which in a case where packet data relating to one call is transmitted by wireless through a plurality of data channels by sharing predetermined control information, even when a transmission operation is permitted only in a case where the packet data exists, an abrupt change of transmission power can be suppressed. A transmitting station inhibits data transmission until the packet data is generated. In a case where the packet data is generated in such a state, the transmitting station starts data transmission through a first data channel IDCH1 in response to this. Thereafter, every time one frame has passed, the transmitting station sequentially starts data transmission through a second, a third and a fourth data channels IDCH2, IDCH3 and IDCH4. By this, an abrupt increase of the transmission power can be suppressed as compared with a case where the data transmission through all the data channels IDCH1 to ICDH4 is started at the same time.

## Description

### TECHNICAL FIELD

The present invention relates to a CDMA (Code Division Multiple Access) mobile communication system to which multicode transmission, closed loop transmission power control, and DTX (Discontinuous Transmission) control are applied, and a CDMA mobile communication station applied to the CDMA mobile communication system, and a CDMA packet transmission method.

### BACKGROUND ART

In the CDMA, different spread codes are respectively assigned to each call to spread packet data, so that a plurality of calls are multiplexed on the same frequency. As a method for realizing higher speed transmission by using this feature, there is a multicode transmission system in which a plurality of data channels respectively using a plurality of spread codes are assigned to one call. This multicode transmission method is disclosed in, for example, air-interface specifications "Specification of Air-Interface for the 3G Mobile System Ver.10." formulated by Association of Radio Industries and Businesses (ARIB).

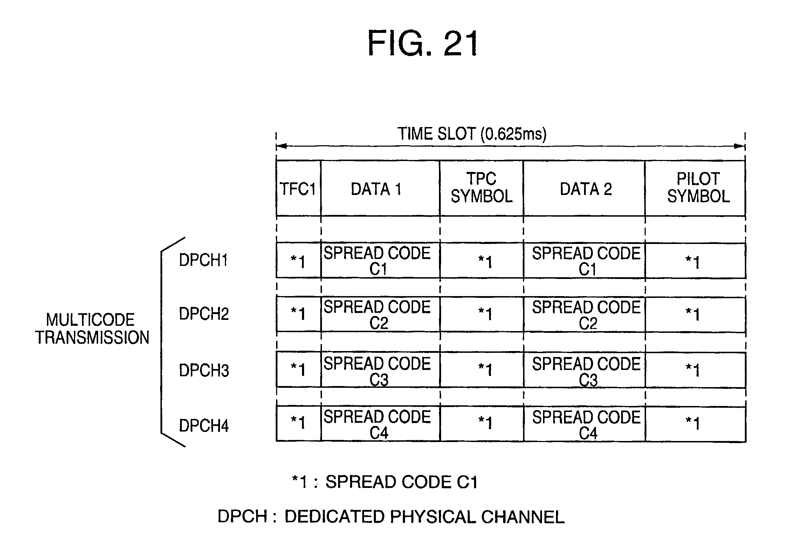

In the multicode transmission method disclosed in the specifications, as shown in Fig. 21, a plurality of data channels DPCH1, DPCH2, DPCH3 and DPCH4 (DPCH: Dedicated Physical CHannel) respectively using a plurality of spread codes (in this example, four codes: spread codes C1, C2, C3 and C4) are used for one call at the same time. In this case, packet data relating to one call is assigned to the respective data channels DPCH1 to DPCH4 in parallel in frame units. By this, it is possible to transmit the data at a speed plural times (in this example, four times) the case where packet data of one call is transmitted through one data channel.

Besides, in the multicode transmission system, control information including a pilot symbol for synchronization establishment, a TPC (Transmitter Power Control) symbol for the so-called closed loop transmission power, and a TFCI (Transport Format Combination Indicator) symbol for upper logical channel multiplexing is added to all the channels DPCH1 to DPCH4.

In this case, the control information is spread by the same spread code (in this example, spread code C1), and is shared by the respective data channels DPCH. That is, with respect to the respective channels DPCH1 to DPCH4, the same control information is transmitted through a common control channel. Accordingly, with respect to all the data channels DPCH1 to DPCH4 relating to the multicode transmission, the transmission is made at the same timing.

By the way, as a technique for controlling transmission power (transmitting power), the so-called closed loop transmission power control is known. The closed loop transmission power control is a processing as follows: The ratio of reception power to interference power (SIR: Signal to Interference Ratio) is measured at a reception side, this measured SIR is compared with a reference value, and a transmission side is instructed to increase or decrease transmission power. In this case, an increase width and a decrease width are respectively set to predetermined constant values. On the other hand, the transmission side increases or decrease the transmission power by the constant value in accordance with the instruction to increase or decrease the transmission power.

Besides, as a technique for controlling transmission power, DTX control is also known. The DTX control is disclosed in, for example, the above specifications. In the DTX control, in the case where there is no packet data to be transmitted, a transmission operation is inhibited, and in the case where packet data to be transmitted is generated, the transmission operation is started.

As described above, in the multicode transmission, since a plurality of data channels are assigned to one call, there is a fear that transmission power is increased. Then, it is conceivable to control the transmission power by applying the closed loop transmission power control and the DTX control to the multicode transmission.

However, in the multicode transmission sharing the control information as described above, the transmission relating to the plurality of data channels assigned to one call is started and stopped at the same timing. Accordingly, in the case where the DTX control is applied to the multicode transmission, the transmission power is abruptly increased or decreased. Thus, the closed loop transmission power control comes to be unable to follow. Therefore, there have been such problems that transmission quality between a mobile station relating to another user and a base station is deteriorated, and wasteful power consumption is produced between the mobile station relating to the other user and the base station.

More specifically, in the case where the transmission power is abruptly increased, the interference power to the other user is also abruptly increased. On the other hand, in the closed loop transmission power control, as described above, the transmission power can be increased only by the predetermined constant value. Accordingly, if the increase of the interference power to the other user is abrupt and is larger than the constant value, it takes a time for the mobile station relating to the other user and the base station to sufficiently increase the transmission power. Thus, since the mobile station relating to the other user and the base station must transmit in the state where the interference power is large, the transmission quality is deteriorated.

In the case where the transmission power is abruptly decreased, the interference power to the other user is also abruptly decreased. In this case, if the decrease of the interference power to the other user is abrupt and larger than the constant value, it takes a time for the mobile station relating to the other user and the base station to sufficiently decrease the transmission power to a necessary minimum. In this case, since the mobile station relating to the other user and the base station continue the transmission with transmission power higher than transmission power for keeping minimum transmission quality, wasteful power is consumed.

### DISCLOSURE OF THE INVENTION

The present invention has been made to solve the foregoing problems, and has an object to provide a CDMA mobile communication station, a CDMA mobile communication system, and a CDMA packet transmission method, in which in a case where wireless transmission of packet data relating to one call is made through a plurality of data channels while predetermined control information is shared, even if a transmission operation is permitted only when the packet data exists, an abrupt change of transmission power can be suppressed.

In order to achieve the object, there is provided something which comprises multicode transmission means for transmitting packet data relating to one call in CDMA mobile communication by wireless through a plurality of data channels by sharing predetermined control information, transmission power control means for controlling transmission power when the packet data is transmitted, on a basis of an instruction to increase or decrease the transmission power from a communication partner station which receives the packet data transmitted by the multicode transmission means, and transmission start control means for inhibiting the start of transmission by the multicode transmission means until the packet data is generated and for controlling the multicode transmission means in a case where the packet data is generated, so that transmission of the packet data is postponed for a predetermined time in a unit of the data channel and is started.

Besides, there is provided something which comprises multicode transmission means for transmitting packet data relating to one call in CDMA mobile communication by wireless through a plurality of data channels by sharing predetermined control information, transmission power control means for controlling transmission power when the packet data is transmitted, on a basis of an instruction to increase or decrease the transmission power from a communication partner station which receives the packet data transmitted by the multicode transmission means, and transmission stop control means for continuing transmission by the multicode transmission means until the packet data transmitted by the multicode transmission means disappears and for controlling the multicode transmission means in a case where the packet data disappears, so that data transmission through the data channels is stopped at timings shifted from each other by a predetermined time in a unit of the data channel.

### BRIEF DESCRIPTION OF THE DRAWINGS

Fig. 1 is conceptual view showing the whole structure of a CDMA mobile communication system according to embodiment 1 of the present invention.

Figs. 2A to 2F are views for explaining multicode transmission of down packet data according to the embodiment 1 of the present invention.

Figs. 3A to 3F are views for explaining multicode transmission of up packet data according to the embodiment 1 of the present invention.

Figs. 4A to 4E are views for explaining multicode transmission of packet data according to embodiment 2 of the present invention.

Figs. 5A to 5E are views for explaining multicode transmission of packet data according to the embodiment 2 of the present invention.

Figs. 6A to 6E are views for explaining multicode transmission of packet data according to the embodiment 2 of the present invention.

Fig. 7 is a block diagram showing an inner structure of a mobile station and a base station according to embodiment 3 of the present invention.

Fig. 8 is a flowchart for explaining multicode transmission of packet data according to the embodiment 3 of the present invention.

Fig. 9 is a view for explaining multicode transmission of packet data according to embodiment 4 of the present invention.

Figs. 10A to 10E are views for more specifically explaining the multicode transmission of the packet data according to the embodiment 4 of the present invention.

Fig. 11 is a flowchart for explaining transmission start control processing according to embodiment 5 of the present invention.

Figs. 12A to 12E are views for explaining multicode transmission of down packet data according to embodiment 6 of the present invention.

Figs. 13A to 13F are views for explaining multicode transmission of up packet data according to the embodiment 6 of the present invention.

Figs. 14A to 14E are views for explaining multicode transmission of packet data according to embodiment 7 of the present invention.

Figs. 15A to 15E are views for explaining multicode transmission of packet data according to the embodiment 7 of the present invention.

Figs. 16A to 16E are views for explaining multicode transmission of packet data according to the embodiment 7 of the present invention.

Fig. 17 is a flowchart for explaining transmission stop control processing according to embodiment 8 of the present invention.

Fig. 18 is a flowchart for explaining transmission stop control processing according to embodiment 9 of the present invention.

Figs. 19A to 19E are views for explaining multicode transmission of packet data according to embodiment 9 of the present invention.

Fig. 20 is a flowchart for explaining transmission stop control processing according to embodiment 10 of the present invention.

Fig. 21 is a view for explaining conventional multicode transmission.

### BEST MODE FOR CARRYING OUT THE INVENTION

Hereinafter, embodiments of the present invention will be described in detail with reference to the accompanying drawings.

### Embodiment 1

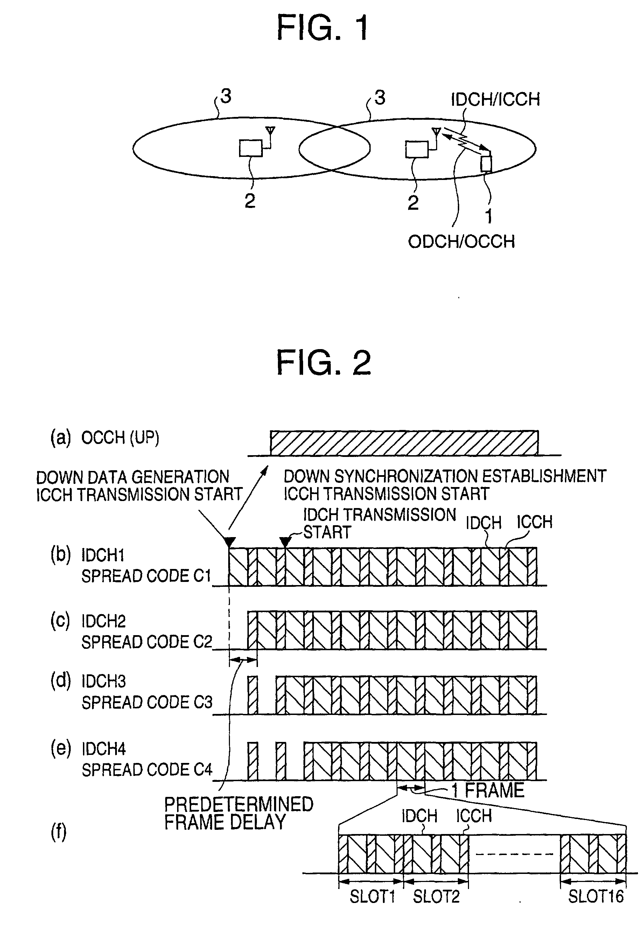

Fig. 1 is a conceptual view showing the whole structure of a CDMA mobile communication system according to embodiment 1 of the present invention. This CDMA mobile communication system includes a mobile station 1 and a base station 2. The mobile station 1 is constituted by a mobile telephone or the like. The base station 2 forms an intrinsic cell 3. This CDMA mobile communication system realizes mobile communication by multicode transmission of packet data by wireless between the base station 2 and the mobile station 1 existing in the cell 3 of the base station 2.

More specifically, the mobile station 1 and the base station 2 perform wireless communication using a data channel DCH(DPDCH: Dedicated Physical Data CHannel) and a control channel CCH (DPCCH: Dedicated Physical Control CHannel). More specifically, the base station 2 transmits down packet data and control information to the mobile station 1 through a down data channel IDCH and a down control channel ICCH, respectively. The mobile station 1 transmits up packet data and control information to the base station 2 through an up data channel ODCH and an up control channel OCCH, respectively.

In the case where packet data is transmitted, the mobile station 1 and the base station 2 use so-called closed loop transmission power control to control transmission power. More particularly, the mobile station 1 measures the SIR on the basis of the power of packet data transmitted from the base station 2 to the mobile station itself and the power (interference power) of, for example, packet data to the mobile station 1 relating to another user. Thereafter, the mobile station 1 compares this measured SIR with a reference value, and instructs the base station 2 to increase or decrease transmission power of the packet data to its own station. In this case, an increase width and a decrease width are predetermined constant values, respectively. On the other hand, the base station 2 increases or decreases the transmission power of the packet data to the mobile station 1 by the constant value in accordance with the instruction from the mobile station 1.

The base station 2 measures the SIR on the basis of the power of packet data transmitted from the mobile station 1 and the power (interference power) of, for example, packet data transmitted from the mobile station 1 relating to another user. Thereafter, the base station 2 compared this measured SIR with a reference value, and instructs the mobile station 1 to increase or decrease the transmission power of the packet data to its own station. In this case, an increase width and a decrease width are predetermined constant values, respectively. On the other hand, the mobile station 1 increases or decreases the transmission power of the packet data by the constant value in accordance with the instruction from the base station 2.

Further, the mobile station 1 and the base station 2 use so-called DTX control, in addition to the closed loop transmission power control, to control the transmission power. More specifically, the mobile station 1 and the base station 2 prohibit a transmission operation until packet data to be transmitted is generated, and starts the transmission operation when the packet data is generated. Besides, the mobile station 1 and the base station 2 continue the transmission operation until the packet data to be transmitted disappears, and stop the transmission operation when the packet data disappears.

As described above, the transmission powers of the mobile station 1 and the base station 2 are controlled to secure transmission quality of a certain level or higher.

Figs. 2A to 2F are views for explaining multicode transmission of down packet data. The base station 2 assigns four down data channels IDCH to one call, so that high speed multicode transmission is realized. That is, the base station 2 divides packet data into frame units, and suitably assigns the respective data frames to the four down data channels IDCH, so that parallel transmission is executed.

More particularly, as shown in Figs. 2B to 2E, the base station 2 assigns four data channels using four spread codes C1, C2, C3 and C4, that is, a down first data channel IDCH1, a down second data channel IDCH2, a down third data channel IDCH3, and a down fourth data channel IDCH4 to the packet data relating to one call.

The structure of the data frame prepared in the base station 2 is as shown in Fig. 2F. That is, the data frame is composed of 16 slots. One slot includes a data symbol and control symbols including a pilot symbol for synchronization establishment, a TPC symbol used for closed loop transmission power control, and a TFCI symbol used for upper logical channel multiplexing.

In the state where there is no down packet data to be transmitted and transmission of down packet data is suspended, the base station 2 monitors whether or not the down packet data is generated. In the case where the down packet data is generated, the base station 2 uses the data transmission timing immediately after the generation of the data as a reference timing, and starts the transmission through the down first data channel IDCH1 in response to the reference timing. Like this, the base station 2 executes the so-called DTX control.

Specifically, as shown in Fig. 2B, after transmitting a predetermined number of dummy frames through the down first data channel IDCH1, the base station 2 transmits predetermined frames of the packet data through the down first data channel IDCH1. In this case, control symbols included in the frame of the packet data are transmitted through a down control channel ICCH different from the down first data channel IDCH1. This down control channel ICCH is the channel using the spread code C1 in this embodiment 1. With respect to an up control channel OCCH, as shown in Fig. 2A, transmission is started by down synchronization establishment.

Besides, as shown in Fig. 2C, the base station 2 transmits dummy frames, the number of which is the same as the above, through the down second data channel IDCH2 in response to a timing delayed from the reference timing by predetermined frames. Thereafter, the base station 2 transmits predetermined frames of the packet data through the down second data channel IDCH2. In this case, the base station 2 newly uses a transmission start timing of the down second data channel IDCH2 as a reference timing.

Further, as shown in Fig. 2D, the base station 2 transmits dummy frames and predetermined frames of the packet data through the down third data channel IDCH3 in response to a timing delayed from this new reference timing by the predetermined frames. Moreover, as shown in Fig. 2E, the base station 2 transmits dummy frames and predetermined frames of the packet data through the down fourth data channel IDCH4 in response to a timing delayed from a reference timing as a transmission start timing of the down third data channel IDCH3 by the predetermined frames.

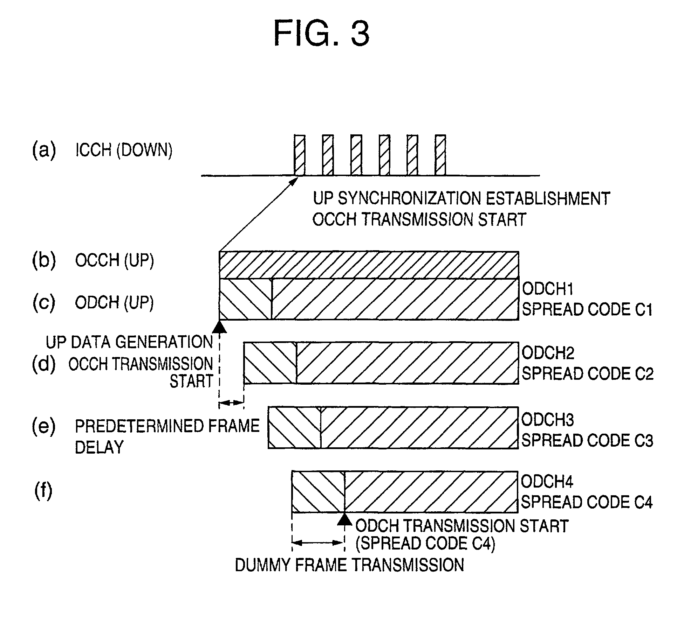

Fig. 3 is a view for explaining multicode transmission of up packet data. The mobile station 1 suspends data transmission until the up packet data is generated. In the case where the up packet data is generated in this state, in response to a reference timing as a data transmission timing immediately after this data generation, the mobile station 1 transmits a predetermined number of dummy frames through an up first data channel ODCH1, and then it transmits the packet data subsequently to these through the up first data channel ODCH1. Besides, the mobile station 1 starts transmission through an up second data channel ODCH2 in response to a timing delayed from the reference timing by predetermined frames, and further starts transmission through an up third data channel ODCH3 and an up fourth data channel ODCH4 every time predetermined frames are delayed. With respect to a down control channel ICCH, as shown in Fig. 3A, transmission is started by up synchronization establishment.

As described above, according to this embodiment 1, when transmission is started in response to the generation of the packet data in the state where data transmission is suspended until the packet data is generated, the transmission is not simultaneously started with respect to all the data channels DCH assigned to one call, but the transmission is sequentially started for the respective data channels DCH with a delay of predetermined frames. Accordingly, the abrupt increase of transmission power can be suppressed.

Thus, the abrupt increase of interference power to another user can be suppressed. As a numerical example, power suppression of about -15 dBµ to +50 dBµ can be realized. Therefore, the mobile station 1 and the base station 2 can execute the closed loop transmission power control excellently. More specifically, in the case where data transmission is started in the mobile station 1, the mobile station 1 relating to the other user can make the increase of transmission power instructed by the base station 2 while following the power increase of the mobile station 1 starting the data transmission. In the case where data transmission to the mobile station 1 is started in the base station 2, the base station 2 can make the increase of transmission power instructed by the mobile station 1 relating to the other user while following the power increase caused by the start of the data transmission. Thus, it is possible to prevent deterioration of transmission quality between the mobile station 1 relating to the other user and the base station 2. Accordingly, a high quality CDMA mobile communication system can be constructed.

### Embodiment 2

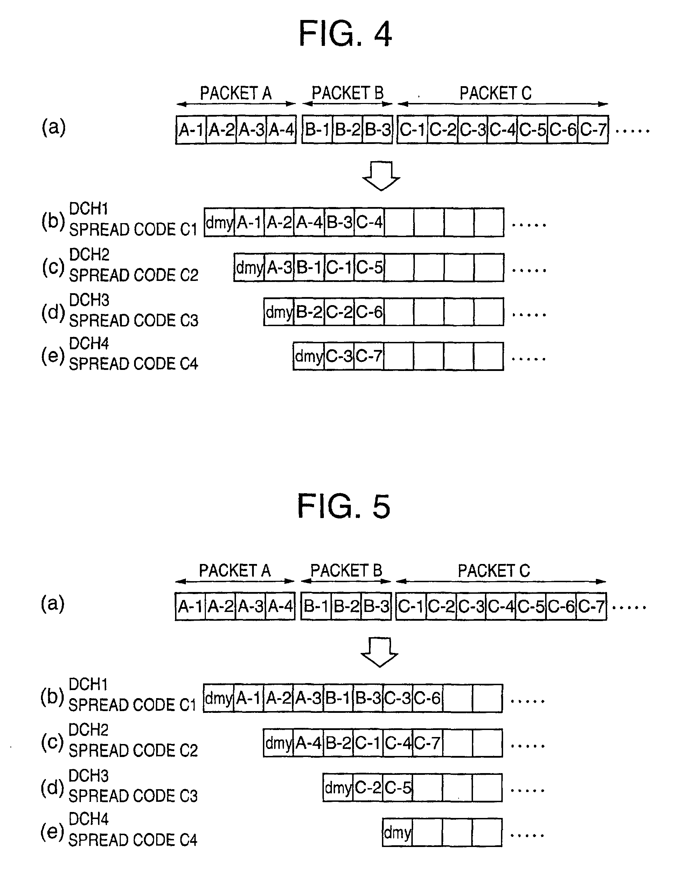

Figs. 4A to 4E are views for explaining multicode transmission of packet data according to embodiment 2 of the present invention. This embodiment 2 is for more specifically explaining the embodiment 1.

A transmitting station constituted by the mobile station 1 or the base station 2 divides packet data A, B, C, ... relating to one call into, for example, as shown in Fig. 4A, a plurality of frames (A-1, A-2, A-3, A-4), (B-1, B-2, B-3), (C-1, C-2, C-3, C-4, C-5, C-6, C-7), respectively. Besides, as shown in Figs. 4B, 4C, 4D, and 4E, the transmitting station assigns a first data channel DCH1, a second data channel DCH2, a third data channel DCH3 and a fourth data channel DCH4 using four spread codes C1, C2, C3 and C4 to the packet data A, B, C, ... relating to the one call. The number of the spread codes, that is, the number of the data channels is previously set as a multicode number Ccode. In the example of Fig. 4, the multicode number Ccode is set to 4.

The transmitting station transmits the plurality of generated frames by using any of the first to fourth data channels DCH1 to DCH4. In this case, the transmitting station makes transmission start timing different for every data channel DCH. At this time, the number of channels which come to have the same transmission start timing, that is, the number of spread codes is previously set as a simultaneous processing code number Cnum. In the example of Fig. 4, the simultaneous processing code number Cnum is set to 1. A delay width of the transmission start timing is previously set in frame units. More specifically, the delay width of the transmission start timing is previously set as a delay frame number Cfrm. The delay frame number Cfrm is determined based on, for example, a time necessary for following transmission power control using the TPC symbol in connection with the increase of interference power caused by increasing the multicode number Ccode by one. In the example of Fig. 4, the delay frame number Cfrm is set to 1.

More particularly, in the case where packet data is generated, the transmitting station starts transmission of one dummy frame dmy through the first data channel DCH1 in response to a reference timing corresponding to a data transmission timing immediately after the generation of the data. Incidentally, the dummy frame dmy may be two or more frames. Next, the transmitting station transmits data frames relating to the packet data through the first data channel DCH1 in response to the end of the transmission of the dummy frame dmy. Besides, the transmitting station starts transmission of one dummy frame dmy through the second data channel DCH2 in response to the passage of one frame from the transmission start of the dummy frame dmy through the first data channel DCH1. Then, the transmitting station transmits data frames subsequently to the dummy frame through the second data channel DCH2.

Further, the transmitting station starts transmission of one dummy frame dmy through the third data channel DCH3 in response to the passage of one frame from the transmission start of the dummy frame dmy through the second data channel DCH2, and starts transmission of data frames subsequently to the dummy frame dmy. Furthermore, the transmitting station starts transmission of one dummy frame dmy through the fourth data channel DCH4 in response to the passage of one frame from the transmission start of the dummy frame dmy through the third data channel DCH3, and starts transmission of data frames subsequently to the dummy frame dmy.

Figs. 5A to 5E are views for explaining multicode transmission of packet data in the case where the delay frame number Cfrm is set to 2. That is, the transmitting station starts transmission relating to the second data channel DCH2 when two frames have passed after transmission relating to the first data channel DCH1 is started. Subsequently, also in the third data channel DCH3 and the fourth data channel DCH4, in the same way, transmission is started in response to a timing when two frames have passed from the transmission start of a dummy frame dmy through the second data channel DCH2, and a timing when two frames have passed from the transmission start of a dummy frame dmy through the third data channel DCH3.

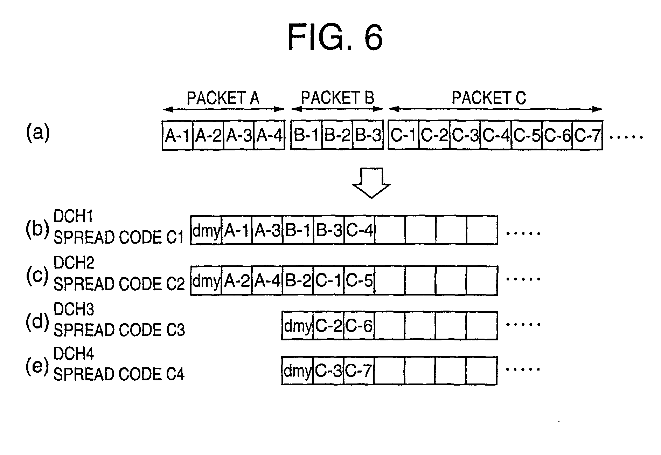

Figs. 6A to 6E are views for explaining multicode transmission of packet data in the case where the delay frame number Cfrm is set to 3, and the simultaneous processing code number Cnum is set to 2. That is, the transmitting station starts transmission relating to two data channels DCH at the same time. More specifically, after the transmitting station starts transmission relating to the first and second data channels DCH1 and DCH2 at the same time, the transmitting station starts transmission relating to the third and fourth data channels DCH3 and DCH4 at the same time after three frames have passed.

As described above, according to this embodiment 2, transmission can be started with various patterns by suitably setting the delay frame number Cfrm and the simultaneous processing code number Cnum when the packet data is transmitted. Accordingly, an increasing pattern of the transmission power can be arbitrarily set. Thus, it is possible to realize desired transmission power control suitable for a surrounding electric wave environment.

### Embodiment 3

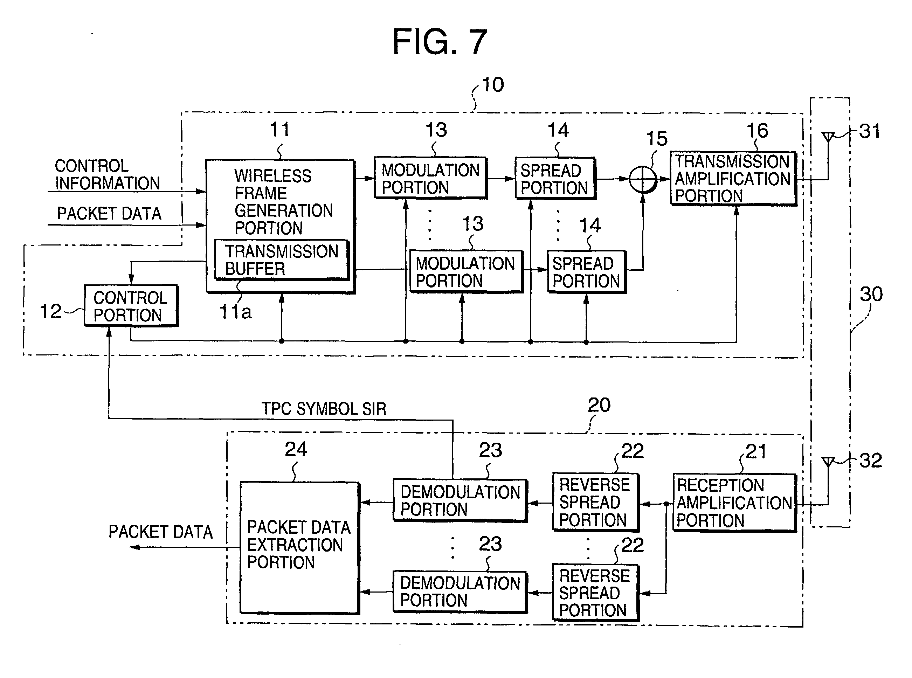

Fig. 7 is a block diagram showing the inside structure of the mobile station 1 and the base station 2 according to embodiment 3 of the present invention. This embodiment 3 is for more specifically explaining the embodiments 1 and 2.

The mobile station 1 and the base station 2 respectively include a transmission portion 10, a reception portion 20, and an antenna portion 30. The transmission portion 10 includes one wireless frame generation portion 11, one control portion 12, four modulation portions 13, four spread portions 14 provided in one-to-one correspondence to the respective modulation portions 13, one synthesis portion 15, and one transmission amplification portion 16. The modulation portions 13 and the spread portions 14 are respectively made to correspond to data channels DCH assigned to one call. In this embodiment 3, since four data channels DCH are assigned to one call, the modulation portions 13 and the spread portions 14 are respectively made to correspond to the four data channels DCH.

The reception portion 20 includes one reception amplification portion 21, four reverse spread portions 22, four demodulation portions 23, and one packet data extraction portion 24. The reverse spread portions 22 and the demodulation portions 23 are respectively made to correspond to the data channels DCH assigned to one call similarly to the case of the transmission portion 10. The antenna portion 30 includes a transmitting antenna 31 and a receiving antenna 32.

Various informations for the closed loop transmission power control are given to the transmission portion 10 from the reception portion 20. Specifically, the TPC symbol demodulated in the reception portion 20 and the SIR measured in the reception portion 20 are given to the transmission portion 10. The transmission portion 10 realizes the increase and decrease of the transmission power in accordance with the instruction of a communication partner station on the basis of the TPC symbol, and sets the TPC symbol for instructing the communication partner station to increase or decrease the transmission power on the basis of the SIR. By this, the closed loop transmission power control is realized.

Next, the internal structure of the transmission portion 10 and the reception portion 20 will be described in more detail. The wireless frame generation portion 11 provided in the transmission portion 10 includes a transmission buffer 11a. The transmission buffer 11a is for temporarily storing the packet data and control information to be transmitted. When receiving the packet data and the control information, the wireless frame generation portion 11 stores the received packet data and the control information in the transmission buffer 11a.

The control portion 12 is made of, for example, a CPU (Central Processing Unit). The control portion 12 monitors the transmission buffer 11a in the wireless frame generation portion 11 at all times in order to detect whether or not the packet data is generated. That is, when the control portion 12 detects the start of storing of the packet data into the transmission buffer 11a, it is concluded that down packet data is generated. Besides, when the control portion 12 detects that the packet data disappears from the transmission buffer 11a, it is concluded that the packet data disappears.

When detecting the generation of the packet data, the control portion 12 controls the operations of the wireless frame generation portion 11, the modulation portion 13, the spread portion 14, and the transmission amplification portion 16, and executes a transmission start control processing. More specifically, the control portion 12 instructs the wireless frame generation portion 11 to start transmission of wireless frames. In this case, the control portion 12 instructs the four data channels DCH assigned to one call on the transmission start timing different for every one or plural channels.

Besides, on the basis of the SIR given from the reception portion 20, the control portion 12 determines a value to be set for the TPC symbol in the data frame to be transmitted. Specifically, the control portion 12 compares the SIR with a reference value, and determines the increase or decrease of transmission power in the partner station. In order to instruct the partner station on the determined increase or decrease of the transmission power of the partner station, the control portion 12 informs the wireless frame generation portion 11 of bit information corresponding to the increase or decrease, and causes it to be set as the TPC symbol of the control information to be transmitted in a next slot.

Further, the control portion 12 instructs the modulation portion 13, the spread portion 14, and the transmission amplification portion 16 on the start of the operation. In this case, the control portion 12 controls the transmission amplification portion 16 in accordance with the TPC symbol given from the reception portion 20, and adjusts the transmission power. Specifically, the control portion 12 executes the transmission power control with respect to the packet data and the control information in the wireless frame, individually.

More specifically, with respect to the packet data, in the case where the TPC symbol indicates the increase of the transmission power, the control portion 12 increases the amplification degree of the transmission amplification portion 16 to increase the transmission power by a predetermined constant width. Besides, with respect to the packet data, in the case where the TPC symbol indicates the decrease of the transmission power, the control portion 12 decreases the amplification degree of the transmission amplification portion 16 to decrease the transmission power by a predetermined constant width. Further, with respect to the control information, on the basis of the number Ccode of the data channels DCH assigned to one call, transmission power Pt per data channel, and a predetermined coefficient η(η> 0), the control portion 12 controls the amplification degree of the transmission amplification 16 to attain the transmission power of Ccode x Pt x η.

The wireless frame generation portion 11 receiving the transmission start instruction generates a wireless frame of a predetermined form on the basis of the packet data and the control information stored in the transmission buffer 11a. For example, as shown in Fig. 2F, the wireless frame generation portion 11 in the base station 2 generates a plurality of wireless frames in each of which a pilot symbol, a data symbol, a TPC symbol, a data symbol, and a TFCI symbol are arranged in this order. The TPC symbol in this case corresponds to the bit information corresponding to the increase or decrease of the transmission power in the partner station informed from the control portion 12.

The wireless frame generation portion 11 selectively gives the plurality of generated wireless frames to the specific modulation portions 13. In this case, in response to the transmission start timing instructed from the control portion 12, the wireless frame generation portion 11 starts the transmission of the wireless frame separately for each of the four data channels DCH. However, the control information in the wireless frame is given to the modulation portion 13 corresponding to the spread code Cl so that it is shared by the four data channels DCH.

The respective modulation portions 13 perform predetermined primary modulation processing such as QPSK (Quadrature Phase Shift-Keying) to the given wireless frames, and generates modulation frames. The respective modulation portions 13 give the generated modulation frames to the corresponding spread portions 14, respectively.

The respective spread portions 14 respectively perform spread processing to the given modulation frames, and generate spread frames. More specifically, the spread codes C1, C2, C3 and C4 are previously set in the respective spread portions 14. The respective spread portions 14 generate the spread frames by calculating the given modulation frames and the previously set spread codes. The respective spread portions 14 give the spread frames to the synthesis portion 15.

The synthesis portion 15 synthesizes the four spread frames given from the respective spread portions 14 to transmit them as one spread signal. The synthesis portion 15 gives the prepared spread signal to the transmission amplification portion 16. After amplifying the spread signal at the amplification degree in accordance with the instruction of the control portion 12, the transmission amplification portion 16 transmits it to the communication partner station through the transmitting antenna 31.

After the spread signal transmitted from the communication partner station is received by the receiving antenna 32, it is given to the reception amplification portion 21. After amplifying the spread signal, the reception amplification portion 21 gives the spread signal after the amplification to the respective reverse spread portions 22. Spread codes C1 to C4 different from those used in the transmission portion 10 are respectively set in the reverse spread portions 22. The reverse spread portion 22 executes a reverse spread processing as a processing reverse to the spread processing in the spread portion 14. Specifically, the respective reverse spread portions 22 reversely spread the spread signals and restore demodulation signals by multiplying the spread signals by the set spread codes C1 to C4. The restored demodulation signals are given to the demodulation portions 23.

The respective demodulation portions 23 restore baseband signals from the demodulation signals by executing a demodulation processing as a processing reverse to the modulation processing in the modulation portion 13. This restored baseband signals are given to the packet data extraction portion 24. The packet data extraction portion 24 separates and extracts packet data from the baseband signals.

The demodulation portion 23 corresponding to the spread code C1 extracts the control information from the baseband signal, and further extracts the TPC symbol from this. The demodulation portion 23 gives the extracted TPC symbol as information for transmission power control of its own station to the control portion 11 provided in the transmission portion 10. Further, the demodulation portion 23 corresponding to the spread code C1 obtains reception power on the basis of the pilot symbol from the extracted control information, and measures the SIR on the basis of the obtained reception power. This demodulation portion 23 gives the measured SIR as information for transmission power control of the partner station to the control portion 11 provided in the transmission portion 10.

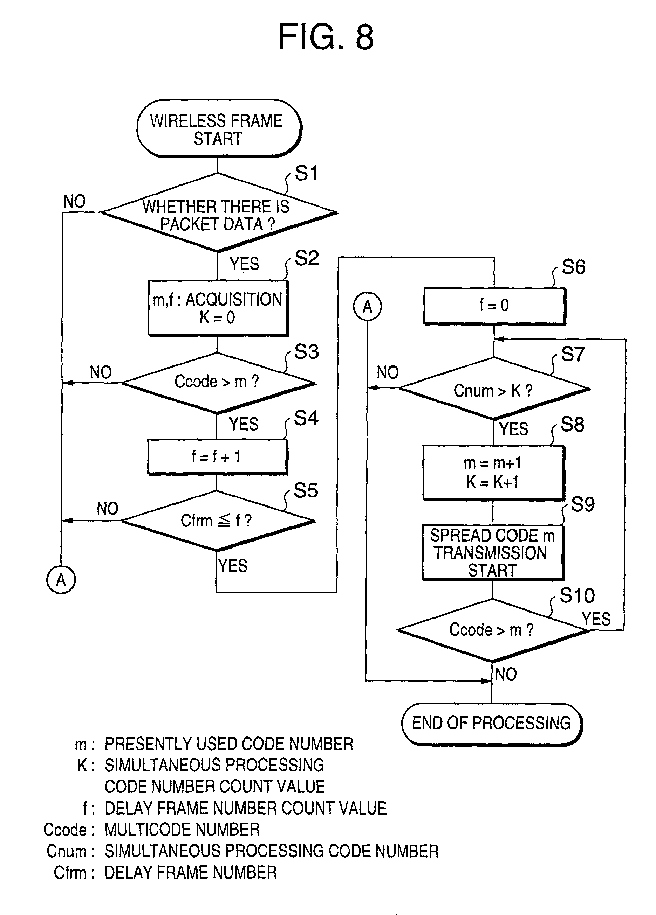

Fig. 8 is a flowchart for explaining a transmission start control processing in the control portion 12 in detail. The control portion 12 realizes the transmission start control processing by software. Incidentally, this transmission start control processing may be executed by hardware for realizing respective processing.

The control portion 12 checks the presence of packet data at every start timing of previously held wireless frames (step S1). Specifically, the control portion 12 judges whether or not storing of the packet data is started in the transmission buffer 11a in the wireless frame generation portion 11. In the case where there is no packet data (NO in step S1), the control portion 12 ends the transmission start control processing, and reopens the processing of the step S1 in response to the start timing of a next wireless frame.

The packet data exits (YES at step S1), the control portion 12 first obtains a presently used code number m and a delay frame number count value f, and clears a simultaneous processing code number count value k (step S2). Thereafter, the control portion 12 compares the multicode number Ccode assigned to one call with the presently used code number m (step S3). If the multicode number Ccode is smaller than the presently used code number m (NO at step S3), since all data channels DCH to be assigned are already used, the control portion 12 ends the transmission start control processing. On the other hand, if the multicode number Ccode is larger than the presently used code number (YES at step S3), the control portion 12 increments the delay frame number count value f by one (step S4).

Next, the control portion 12 judges whether or not the delay frame number count value f is not smaller than the predetermined delay frame number Cfrm (step S5). If the delay frame number count value f is smaller than the delay frame number Cfrm (NO at step S5), since the predetermined delay timing has not yet passed, the control portion 12 ends the processing. On the other hand, if the delay frame number count value f is not smaller than the delay frame number Cfrm (YES at step S5), since the delay timing has passed, the control portion 12 first clears the delay frame number count value f for preparation of a next processing (step S6).

Next, the control portion 12 judges whether or not the simultaneous processing code number count value k is smaller than the simultaneous processing code number Cnum (step S7). If the simultaneous processing code number count value k is smaller than the simultaneous processing code number Cnum (YES at step S7), the control portion 12 increments the presently used code number m and the simultaneous processing code number count value k by one (step S8). Thereafter, the control portion 12 starts transmission relating to the m-th data channel DCHm corresponding to the presently used code number m (step S9).

Next, the control portion 12 judges whether or not the presently used code number m is smaller than the multicode number Ccode (step S10). If the presently used code number m is larger than the multicode number Ccode (NO at step S10), since all the data channels DCH are already used, the control portion 12 ends the transmission start control processing. On the other hand, if the presently used code number m is smaller than the multicode number Ccode (YES at step S10), a remaining data channel DCH is left and there is a possibility that what is to be processed at the same time as the m-th data channel DCHm remains. Then, the control portion 12 again executes the processing of the step S7 as to whether or not the simultaneous processing code number count value k is smaller than the simultaneous processing code number Cnum.

If the data channel DCH to be processed at the same time remains, that is, the simultaneous processing code number Cnum is 2 or more, the control portion 12 increments the presently used code number m and the simultaneous processing code number count value k by one at step S8, and then, at step S9, the control portion starts transmission relating to the m-th data channel DCHm after increment. On the other hand, if a data channel DCH to be processed at the same time does not remain, that is, the simultaneous processing code number Cnum is 1, the control portion 12 ends the transmission start control processing.

The transmission start control processing as described above is executed, so that the transmission is performed for one call through the four data channels DCH1 to DCH4.

### Embodiment 4

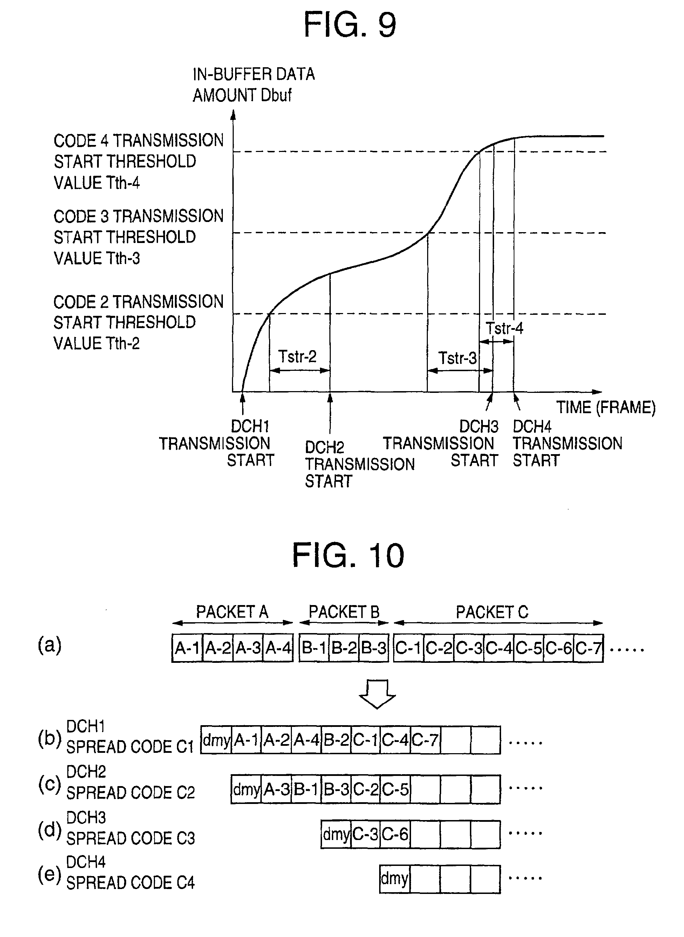

Fig. 9 is a view for explaining multicode transmission of packet data according to embodiment 4 of the present invention. In the description of this embodiment 4, reference is made to Fig. 7 as the need arises.

In the above embodiments 1 to 3, irrespective of the size of the amount of the packet data to be transmitted, all data channels DCH assigned to one call are used. On the other hand, in this embodiment 4, when the amount of the packet data to be transmitted is small, the data channels DCH to be used are limited.

More specifically, on the basis of an in-buffer data amount Dbuf, the control portion 12 determines the number of data channels to be used. The in-buffer data amount Dbuf is the data amount of the packet data stored in the transmission buffer 11a in the wireless frame generation portion 11. More specifically, on the basis of a comparison result between the in-buffer data amount Dbuf and a (m+1)th transmission start threshold value Tth-(m+1), and a code (m+1) transmission start time Tstr-(m+1), the control portion 12 determines a data channel DCH through which transmission is to be started.

The (m+1 )th transmission start threshold value Tth-(m+1) and the code(m+1) transmission start time Tstr-(m+1) are set to suitable values in accordance with a transmission environment. More specifically, in the case where a generation amount of packet data is large on average and in the case where piling up in the transmission buffer 11a is to be avoided, the (m+1)th transmission start threshold value Tth-(m+1) is set to a relatively small value, and the code (m+1) transmission start time Tstr-(m+1) is set to a relatively small value. In the case where a generation amount of packet data is small on average and in the case where an amount of interference itself is made small, the (m+1)th transmission start threshold value Tth-(m+1) is set to a relatively large value, and the code (m+1) transmission start time Tstr-(m+1) is set to a relatively large value.

When the multicode transmission is further described in detail, in response to the detection of the presence of packet data, the control portion 12 first starts transmission through the first data channel DCH1. Thereafter, in response to the timing when the in-buffer data amount Dbuf has been not smaller than a code 2 transmission start threshold value Tth-2 throughout a predetermined code 2 transmission start time Tstr-2, the control portion 12 starts transmission through the second data channel DCH2.

Further, in response to the timing when the in-buffer data amount Dbuf has been not smaller than a code 3 transmission start threshold value Tth-3 larger than the code 2 transmission start threshold value Tth-2 throughout a predetermined code 3 transmission start time Tstr-3, the control portion 12 starts transmission through the third data channel DCH3. Furthermore, in response to the timing when the in-buffer data amount Dbuf has been not smaller than a code 4 transmission start threshold value Tth-4 larger than the code 3 transmission start threshold value Tth-3 throughout a predetermined code 4 transmission start time Tstr-4, the control portion 12 starts transmission through the fourth data channel DCH4.

Like this, since the transmission start timing is determined on the basis of the in-buffer data amount Dbuf, a delay width from the transmission start of another data channel becomes relatively random. More specifically, as shown in Fig. 10, a delay width between the first data channel DCH1 and the second data channel DCH2 is one frame, a delay width between the second data channel DCH2 and the third data channel DCH3 is three frames, and a delay width between the third data channel DCH3 and the fourth data channel DCH4 is two frames.

As described above, according to this embodiment 4, every time the in-buffer data amount Dbuf has been not smaller than the predetermined transmission start threshold value Tth throughout the predetermined transmission start time Tstr, the transmission relating to the respective data channel DCH is started. Accordingly, the transmission start timing of the respective data channel DCH is shifted. Thus, similarly to the embodiment 1, since the closed loop transmission power control can be excellently carried out, it is possible to prevent deterioration of transmission quality between the mobile station 1 relating to another user and the base station 2.

Further, in the case where the in-buffer data amount Dbuf is small, all data channels DCH are not used. For example, in the case where the in-buffer data amount Dbuf does not exceed the code 4 transmission start threshold value Tth-4, only the three data channels DCH1 to DCH3 are used among the four data channels DCH1 to DCH4 assigned to one call. Accordingly, the abrupt increase of transmission power can be suppressed as compared with the case where all the data channels DCH are used. Thus, the abrupt increase of interference power to another user can be suppressed as compared with the case where all the data channels DCH are used.

### Embodiment 5

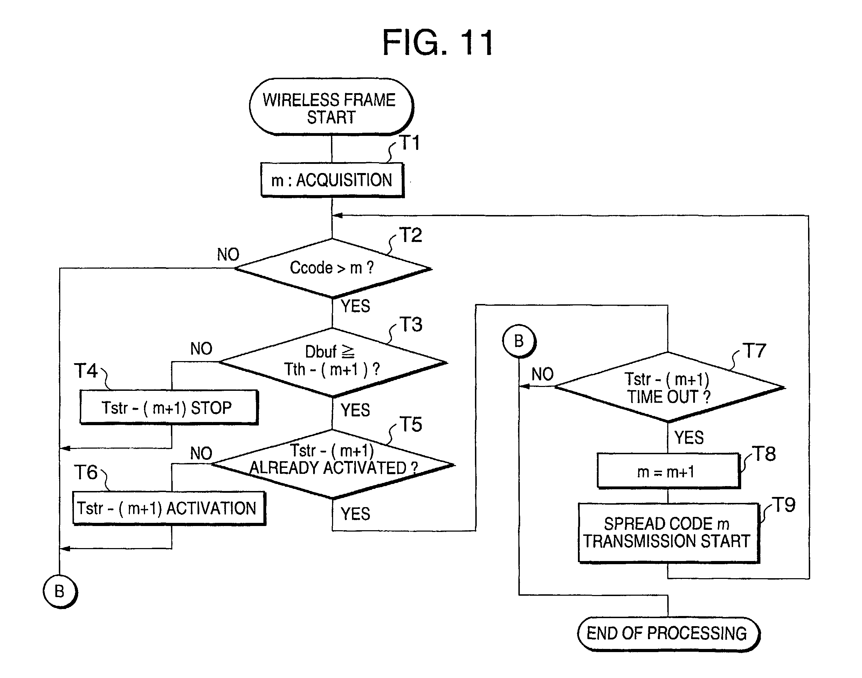

Fig. 11 is a flowchart for explaining a transmission start control processing relating to embodiment 5 of the present invention. This embodiment 5 is for explaining the embodiment 4 in more detail.

The control portion 12 first acquires a presently used code number m in response to a start timing of a held wireless frame (step T1). Next, the control portion 12 judges whether or not this acquired presently used code number m is smaller than a previously set multicode number Ccode (step T2). If the presently used code number m is larger than the multicode number Ccode (NO at step T2), since all data channels DCH assigned to one call are already used, the control portion 12 ends the transmission start control processing.

On the other hand, if the presently used code number m is not larger than the multicode number Ccode (YES at step T2), the control portion 12 judges whether or not the in-buffer data amount Dbuf is not smaller than the code m transmission start threshold value Tth-(m+1) (step T3). If the in-buffer data amount Dbuf is smaller than the code m transmission start threshold value Tth-(m+1) (NO at step T3), since the packet data is not stored in the transmission buffer 11a to such a degree that another data channel DCH must be used, after executing a stop processing (step T4) of a code m transmission start judgment timer Tstr-(m+1), the control portion 12 ends the transmission start control processing.

On the other hand, if the in-buffer data amount Dbuf is not smaller than the code m transmission start threshold value Tth-(m+1) (YES at step T3), the control portion 12 judges whether or not the code m transmission start judgment timer Tstr-(m+1) is already activated (step T5). If the code m transmission start judgment timer Tstr-(m+1) is not activated (NO at step T5), the control portion 12 activates the code m transmission start judgment timer Tstr-(m+1) (step T6), and then, the control portion ends the transmission start control processing. On the other hand, if the code m transmission start judgment timer Tstr-(m+1) is activated (YES at step T5), the control portion 12 judges whether or not the code m transmission start judgment timer Tstr-(m+1) times out (step T7).

If the code m transmission start judgment timer Tstr-(m+1) does not time out (NO at step T7), since the in-buffer data amount Dbuf might have merely temporarily exceeded the code m transmission start threshold value Tth-(m+1), the control portion 12 ends this transmission start control processing. Thereafter, after the start timing of a next wireless frame have passed, if the in-buffer data amount Dbuf is not smaller than the code m transmission start threshold value Tth-(m+1) and the code m transmission start judgment timer Tstr-(m+1) times out (YES at step T7), after incrementing the presently used code number m by one (step T8), the control portion 12 starts communication through the m-th data channel DCH. Thereafter, the control portion 12 returns to step T2 and judges whether or not all data channels DCH are used, and in the case where all are not used, the processing from the step T3 is repeated and executed.

### Embodiment 6

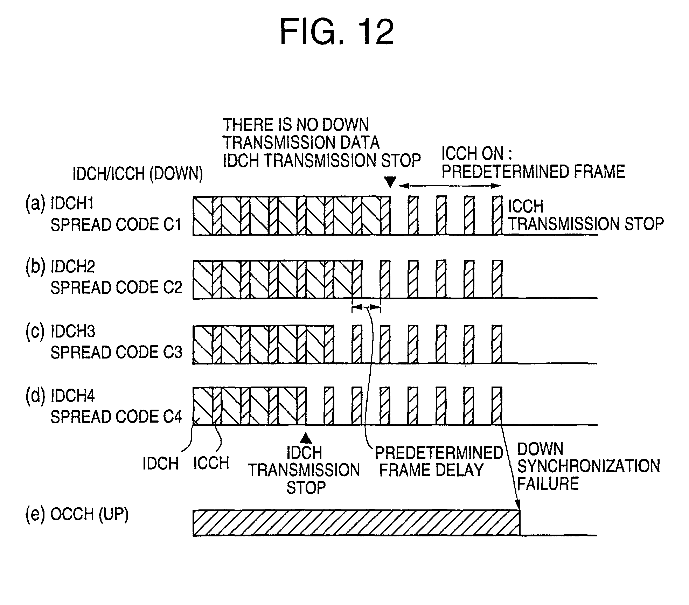

Fig. 12 is a view for explaining multicode transmission of down packet data according to embodiment 6 of the present invention.

In the embodiments 1 to 5, the transmission start control of packet data has been described. On the other hand, in this embodiment 6, transmission stop control of packet data is exemplified.

In the state where down packet data to be transmitted exists and the down packet data is transmitted, the base station 2 monitors whether or not the down packet data disappears from the transmission buffer 11a. In the case where the down packet data disappears, the base station 2 starts to stop the transmission through the data channel IDCH in response to this timing.

Specifically, in the case where the control portion 12 detects that the down packet data disappears from the transmission buffer 11a, the control portion stops the transmission through the down fourth data channel IDCH4 in response to this detection. Thereafter, after a delay of predetermined frames, the control portion 12 stops the transmission relating to the down third data channel IDCH3. Further, after a delay of predetermined frames, the control portion 12 stops the transmission relating to the down second data channel IDCH2, and after a delay of predetermined frames from the transmission stop of the down second data channel IDCH2, the control portion stops the transmission through the down first data channel IDCH1. With respect to the up control channel OCCH, as shown in Fig. 12E, transmission is stopped by down synchronization failure.

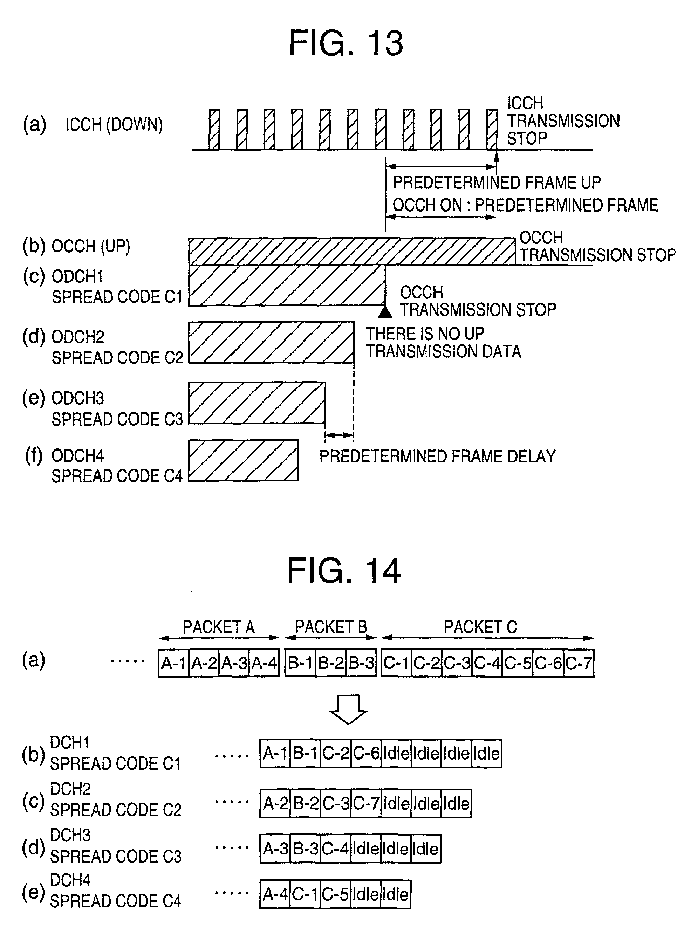

Fig. 13 is a view for explaining multicode transmission of up packet data. Also in the up packet data, similarly, the mobile station 1 stops the transmission relating to the up fourth data channel ODCH4 in response to disappearance of the up packet data, and then, every time a delay of predetermined frames occurs, the mobile station sequentially stops the transmission relating to the up third, up second and up first data channels ODCH3, ODCH2 and ODCH1.

As described above, according to the embodiment 6, when the transmission of the packet data is stopped, the transmission of all data channels DCH assigned to one call is not stopped at the same time, but the transmission is sequentially stopped for the respective channels at intervals of the predetermined frames. Accordingly, the abrupt decrease of transmission power can be suppressed. Thus, the mobile station 1 and the base station 2 can excellently perform the closed loop transmission power control.

More specifically, in the case where the data transmission is stopped in the mobile station 1, the mobile station 1 relating to another user can make the decrease of transmission power instructed by the base station 2 while following the decrease of power of the mobile station 1 which starts the data transmission. In the case where the data transmission to the mobile station 1 is stopped in the base station 2, the base station 2 can make the decrease of transmission power instructed by the mobile station 1 relating to another user while following the decrease of the power caused by stopping the data transmission. Thus, it is possible to suppress wasteful power consumption of the mobile station 1 relating to the other user and the base station 2.

### Embodiment 7

Fig. 14 is a view for explaining multicode transmission of packet data according to embodiment 7 of the present invention. This embodiment 7 is for more specifically explaining the embodiment 6.

The transmitting station uses the same parameters as the transmission start control processing with respect to four data channels DCH1 to DCH4 assigned to one call. Specifically, the transmitting station uses the multicode number Ccode, the simultaneous processing code number Cnum, and the delay frame number Cfrm. The multicode number Ccode indicates the number of data channels assigned to one call, similarly to the transmission start control processing. The simultaneous processing code number Cnum indicates the number of channels in which the processing is stopped at the same time. The delay frame number Cfrm indicates a delay width from a transmission stop relating to another data channel. These parameters are set in advance similarly to the transmission start control processing. In the example of Fig. 14, the multicode number Ccode, the simultaneous processing code number Cnum, and the delay frame number Cfrm are set to 4, 1, and 1, respectively.

In the case where the packet data disappears from the transmission buffer 11a, in response to the timing of this disappearance, the transmitting station starts to stop the transmission relating to the four data channels DCH1 to DCH4. In this case, data frames to be transmitted do not disappear in all the data channels DCH at the same time, but in general, they disappear at different timings. Then, in the case where data frames to be transmitted disappear, the transmitting station transmits so-called idle frames (Idle).

In the embodiment 7, data frames disappear in the third and fourth data channels DCH3 and DCH4 at the same timing, and after one frame from that, data frames disappear in the first and second data channels DCH1 and DCH2 at the same timing. Accordingly, when the transmission of the data frames relating to the third and fourth data channels DCH3 and DCH4 is ended, the transmitting station transmits idle frames in response to the end of the data frames.

In such a state, as shown in Fig. 14E, in response to disappearance of the packet data from the transmission buffer 11a, the transmitting station stops the transmission relating to the fourth data channel DCH4. Specifically, in the case of this embodiment 4, the transmission of data frames in all the data channels is ended at the timing when one frame of the idle frame through the fourth data channel DCH4 is transmitted. Accordingly, the transmitting station stops the transmission relating to the fourth data channel DCH4 at the time when the transmission of the idle frame of the second frame is ended.

In view of the fact that 1 is set as the delay frame number Cfrm, as shown in Fig. 14D, the transmitting station stops the transmission relating to the third data channel DCH3 after one frame has passed from the transmission stop relating to the fourth data channel DCH4. As described above, the data frame of the third data channel DCH3 disappears at the same timing as the fourth data channel DCH4. Accordingly, the transmission relating to the third data channel DCH3 is stopped after idle frames of three frames more than those of the fourth data channel DCH4 by one frame are transmitted.

Further, as shown in Fig. 14C, the transmitting station stops the transmission relating to the second data channel DCH2 after one frame has passed from the transmission stop relating to the third data channel DCH3. In this case, after idle frames of three frames are transmitted, the transmission of the second data channel DCH2 is stopped.

Furthermore, as shown in Fig. 14B, the transmitting station stops the transmission relating to the first data channel DCH1 after one frame has passed from the transmission stop relating to the second data channel DCH2. In this case, after idle frames of four frames are transmitted, the transmission of the first data channel DCH1 is stopped.

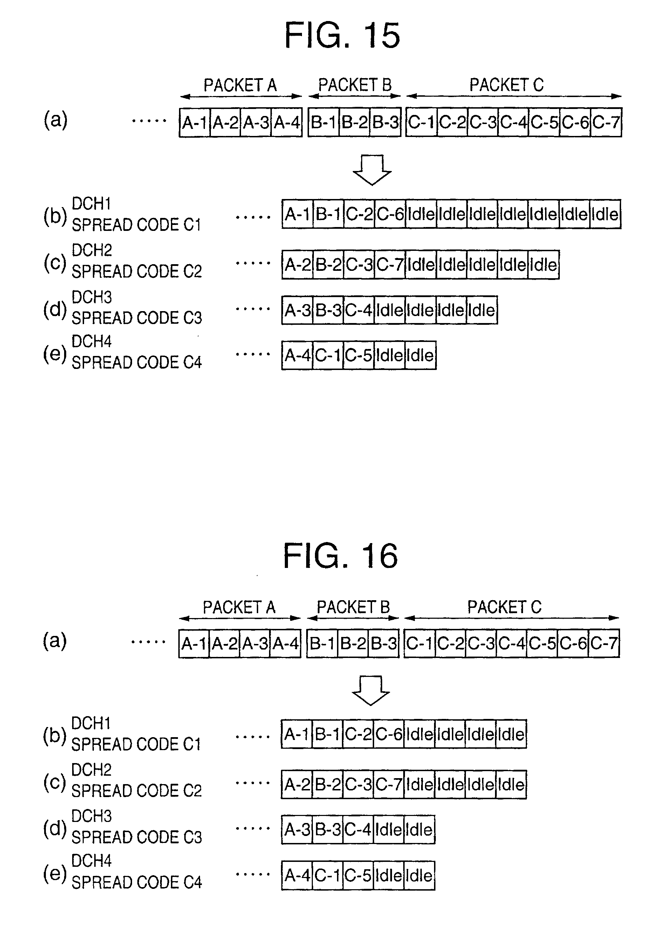

Fig. 15 is a view for explaining multicode transmission of packet data in the case where the delay frame number Cfrm is set to 2. That is, after two frames have passed from the transmission stop timing relating to the fourth data channel DCH4, the transmitting station stops the transmission relating to the third data channel DCH3. Besides, after two frames have passed from the timing when the transmission relating to the third data channel DCH3 is stopped, the transmitting station stops the transmission relating to the second data channel DCH2, and further, after two frames have passed from that, the transmitting station stops the transmission relating to the first data channel DCH1.

Fig. 16 is a view for explaining multicode transmission of packet data in the case where the delay frame number Cfrm is set to 3, and the simultaneous processing code number Cnum is set to 2. That is, the transmitting station stops the transmission relating to two data channels at the same time. More specifically, the transmitting station stops the transmission relating to the second and first data channels DCH2 and DCH1 at the same time in response to the timing when three frames have passed from the transmission stop relating to the fourth and third data channels DCH4 and DCH3.

As described above, according to the embodiment 7, when the transmission of the packet data is stopped, by suitably setting the delay frame number Cfrm and the simultaneous processing code number Cnum, the transmission can be stopped in various patterns. Accordingly, a decreasing pattern of transmission power can be arbitrarily set. Thus, desired transmission power control suitable for a surrounding electric wave environment can be realized.

### Embodiment 8

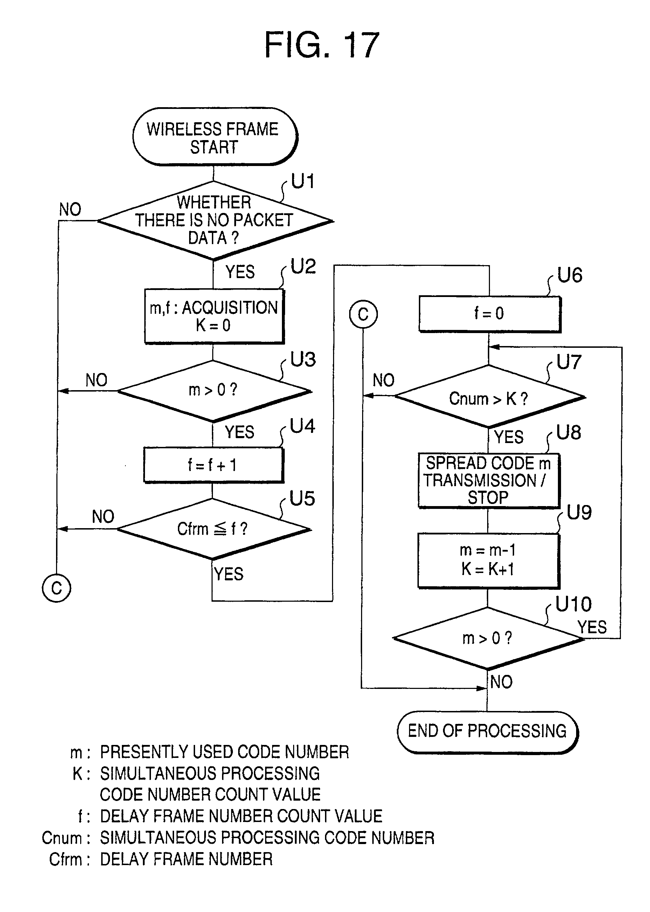

Fig. 17 is a flowchart for explaining transmission stop control processing according to embodiment 8 of the present invention. This embodiment 8 is for more specifically explaining the embodiments 6 and 7.

This transmission stop control processing is similar to the transmission start control processing explained in the embodiment 3 by use of Fig. 8. Different points are step U1, step U3, step U8, step U9 and step u10. That is, the step U1 is a processing for judging whether or not packet data disappears from the transmission buffer 11a. The step U3 is a processing for judging whether or not the presently used code number m is larger than 0 in view of the fact that use data channels are decreased every time transmission is stopped. That is, this step is provided because if the presently used code number m is 0, there is no data channel in which transmission is to be stopped. The step U8 is a processing for stopping the transmission relating to the m-th data channel DCHm. A different point in the step U9 is that in the case where transmission relating to one data channel DCH is stopped, the presently used code number m is decremented by one. The step u10 is a processing for judging whether or not the presently used code number m is larger than 0, which is provided because of the same reason as the step U3.

### Embodiment 9

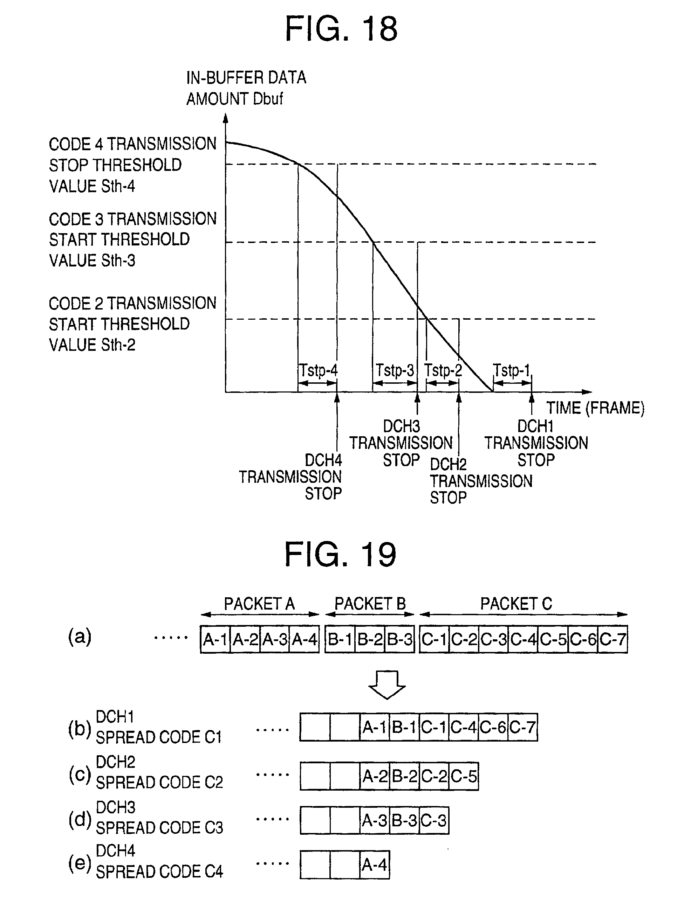

Fig. 18 is a conceptual view for explaining a transmission stop control processing according to embodiment 9 of the present invention.

In the embodiments 6 to 8, the transmission stop control processing is executed in response to the timing when the packet data disappears in the transmission buffer 11a. In this case, the transmission through all data channels DCH assigned to one call continues until the packet data disappears in the transmission buffer 11a, and then, the transmission is stopped at different timings. On the other hand, in this embodiment 9, in the state where the packet data is still stored in the transmission buffer 11a, the transmission through the data channels DCH is stopped at different timings.

More specifically, this transmission stop control processing is performed by the control portion 12. On the basis of the in-buffer data amount Dbuf, the control portion 12 determines a channel in which transmission is to be stopped. More specifically, the control portion 12 determines the transmission stop channel on the basis of a comparison result between the in-buffer data amount Dbuf and the code m transmission stop threshold value Sth-m, and the code m transmission stop time Tstp-m. The code m transmission stop threshold value Sth-m and the code m transmission stop time Tstp-m are set to values suitable for a transmission environment similarly to the code (m+1) transmission start threshold value Tth-(m+1) and the code (m+1) transmission start time Tstr-(m+1).

More specifically, the control portion 12 monitors the in-buffer data amount Dbuf at all times. As a result of this monitoring, the transmission relating to the fourth data channel DCH4 is stopped in response to the timing when the in-buffer data amount Dbuf has been not larger than a code 4 transmission stop threshold value Sth-4 throughout a code 4 transmission stop time Tstp-4.

Besides, the control portion 12 stops the transmission relating to the third data channel DCH3 in response to the timing when the in-buffer data amount Dbuf has been not larger than a code 3 transmission stop threshold value Sth-3 smaller than the code 4 transmission stop threshold value Sth-4 throughout a code 3 transmission stop time Tstp-3. Further, the control portion 12 stops the transmission relating to the second data channel DCH2 in response to the timing when the in-buffer data amount Dbuf has been not larger than a code 2 transmission stop threshold value Sth-2 smaller than the code 3 transmission stop threshold value Sth-3 throughout a code 2 transmission stop time Tstp-2. Furthermore, the control portion 12 stops the transmission relating to the first data channel DCH1 in response to the timing when the in-buffer data amount Dbuf has been 0 throughout a code 1 transmission stop time Tstp-1.

Like this, the transmission stop timing is determined on the basis of the in-buffer data amount Dbuf. Accordingly, a delay width from a transmission stop of another data channel DCH becomes relatively random. More specifically, as shown in Fig. 19, a delay width between the fourth data channel DCH4 and the third data channel DCH3 is two frames, a delay width between the third data channel DCH3 and the second data channel DCH2 is one frame, and a delay width between the second data channel DCH2 and the first data channel DCH1 is 2 frames.

As described above, according to this embodiment 9, when the in-buffer data amount Dbuf has been not larger than the predetermined transmission stop threshold value Sth-m throughout the predetermined transmission stop time Tstp-m, the transmission is sequentially stopped for the respective data channel DCH. Accordingly, the abrupt decrease of transmission power can be prevented. Thus, the mobile station 1 and the base station 2 can excellently perform the closed loop transmission power control similarly to the embodiment 6. Therefore, wasteful power consumption of the mobile station 1 and the mobile station 2 can be suppressed.

Further, as the in-buffer data amount Dbuf becomes small, the number of used data channels is decreased. Accordingly, interference power to another user can be made smaller than the case where all data channels are continuously used until the in-buffer data amount Dbuf becomes 0.

### Embodiment 10

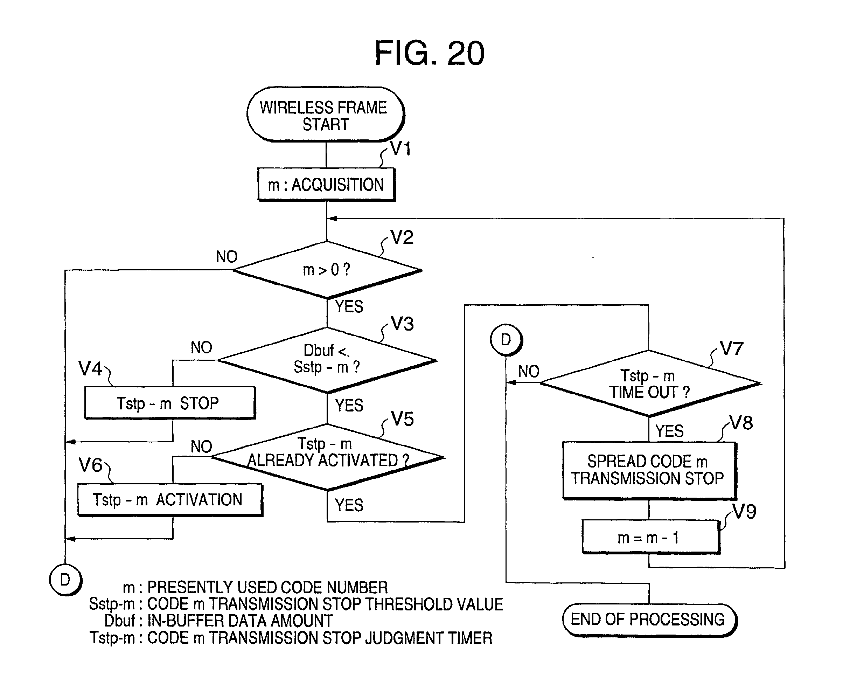

Fig. 20 is a flowchart for explaining transmission stop control processing according to embodiment 10 of the present invention. This embodiment 10 is for more specifically explaining the embodiment 9.

The control portion 12 first acquires the presently used code number m in response to the start timing of a held wireless frame (step U1). Next, the control portion 12 judges whether or not this acquired presently used code number m is larger than 0 (step U2). If the presently used code number m is smaller than 0 (NO at step U2), since the transmission of all data channels DCH assigned to one call is stopped, the control portion 12 stops the transmission stop control processing.

On the other hand, if the presently used code number m is larger than 0 (YES at step U2), the control portion 12 judges whether or not the in-buffer data amount Dbuf is not larger than a predetermined code m transmission stop threshold value Sth-m (step U3). If the in-buffer data amount Dbuf is larger than the code m transmission stop threshold value Sth-m (NO at step U3), after executing a stop processing of a code m transmission stop timer Tstp-m (step U4), the control portion 12 stops the transmission stop control processing.

On the other hand, if the in-buffer data amount Dbuf is not larger than the code m transmission stop threshold value Sth-m (YES at step U3), the control portion 12 judges whether or not the code m transmission stop timer Tstp-m is already activated (step U5). If the code m transmission stop timer Tstp-m is not activated (NO at step U5), the control portion 12 activates the code m transmission stop timer Tstp-m (step U6), and then, the control portion ends the transmission stop control processing. On the other hand, if the code m transmission stop timer Tstp-m is activated (YES at step U5), the control portion 12 judges whether or not the code m transmission stop timer Tstp-m times out (step U7).

If the code m transmission stop timer Tstp-m does not time out (NO at step U7), since the in-buffer data amount Dbuf might have merely temporarily become smaller than the code m transmission stop threshold value Sth-m, the control portion 12 ends this transmission stop control processing. Thereafter, after a start timing of a next wireless frame has passed, if the in-buffer data amount Dbuf is not larger than the code m transmission stop threshold value Sth-m and the code m transmission stop timer Tstp-m times out (YES at step U7), the control portion 12 ends the communication through the m-th data channel DCHm after decrementing the presently used code number m by one (step U8). Thereafter, the control portions 12 returns to the step U2, and judges whether or not the transmission of all data channels DCH is ended, and in the case where the transmission of all channels is not yet ended, the control portion repeats and executes the processing from the step U3.

### Another embodiment

Although the explanation of the embodiments of the present invention is as described above, the present invention is not limited to the foregoing embodiments. For example, in the above embodiments, the number of channels assigned to one call is 4. However, it is needless to say that the number of channels may be an integer other than 4.

As described above, according to the present invention, in the state where transmission start is prohibited until packet data relating to one call is generated and in the case where the data is generated, a first wireless station sequentially starts data transmission while postponing it by a predetermined time in a unit of a data channel. Accordingly, as compared with the case where data transmission is started with respect to all data channels at the same time, abrupt increase of transmission power can be suppressed.

Thus, abrupt increase of interference power can be suppressed. Accordingly, another first wireless station different from the first wireless station can make the increase of the transmission power on the basis of an instruction from a second wireless station while following the increase of the interference power. Thus, deterioration of transmission quality between the first wireless station and the second wireless station can be prevented. Thus, a highly reliable CDMA mobile communication system can be constructed.

Besides, in the state where transmission continues until packet data relating to one call disappears and in the case where the data disappears, the first wireless station sequentially stops the data transmission at timings shifted by a predetermined time in a unit of a data channel. Accordingly, as compared with the case where the data transmission is stopped with respect to all data channels at the same time, abrupt decrease of transmission power can be suppressed.

Thus, abrupt decrease of interference power can be prevented. Accordingly, another first wireless station different from the first wireless station can make the decrease of the transmission power on the basis of the instruction from the second wireless station while following the decrease of the interference power. Thus, wasteful power consumption of the first wireless station can be prevented.

Further, in the case where data transmission is started on the basis of an amount of data to be transmitted, not a predetermined time, since the data transmission is not started unless the data amount exceeds a transmission start threshold value, the number of data channels to be used is restricted in the case where the data amount is small. Accordingly, in the case where the data amount is small, abrupt increase of transmission power can be suppressed as compared with the case where all data channels are used.

Furthermore, in the case where data transmission is started only when the state, in which an amount of data to be transmitted is not smaller than a transmission start threshold value, is kept throughout a transmission start time, erroneous control due to an abrupt noise or the like can be prevented.

Further, in the case where data transmission is stopped on the basis of an amount of data to be transmitted, not a predetermined time, since the use of data channels is stopped during the data transmission, not after disappearance of the data, the abrupt drop of the transmission power can be more effectively suppressed than the case where the use of the data channels is first stopped after the disappearance of the data.

Furthermore, in the case where data transmission is stopped only when the state, in which the amount of data to be transmitted is not larger than a transmission stop threshold value, is kept throughout a transmission stop time, erroneous control due to an abrupt noise or the like can be prevented.

Further, in the case where the number of data channels in which transmission start or transmission stop is performed at the same time can be set to one or plural, transmission power control suitable for a transmission environment can be realized.

### INDUSTRIAL APPLICABILITY

As described above, in the CDMA (Code Division Multiple Access) mobile communication system, the CDMA mobile communication station applied to this CDMA mobile communication system, and the CDMA packet transmission method according to the present invention, the multicode transmission, the closed loop transmission power control, and the DTX (Discontinuous Transmission) control are applied.

## Claims

1. A CDMA mobile communication station, comprising:
multicode transmission means for transmitting packet data relating to one call in CDMA mobile communication by wireless through a plurality of data channels by sharing predetermined control information;
transmission power control means for controlling transmission power when the packet data is transmitted, on a basis of an instruction to increase or decrease the transmission power from a communication partner station which receives the packet data transmitted by the multicode transmission means; and
transmission start control means for inhibiting a start of transmission by the multicode transmission means until the packet data is generated and for controlling the multicode transmission means in a case where the packet data is generated, so that transmission of the packet data is postponed for a predetermined time in a unit of the data channel and is started.

2. A CDMA mobile communication station according to claim 1, wherein the transmission start control means comprises:
packet detection means for detecting generation of the packet data;
first transmission start means for, in a state where the transmission start is suspended until the generation of the packet data is detected by the packet detection means and in a case where the generation of the packet data is detected by the packet detection means, controlling the multicode transmission means to start data transmission through a first data channel among the plurality of data channels; and
second transmission start means for controlling the multicode transmission means in response to elapse of a predetermined time from the start of the data transmission through the first data channel by the first transmission start means and for starting data transmission through a second data channel different from the first data channel among the plurality of data channels.

3. A CDMA mobile communication station according to claim 1, wherein the transmission start control means comprises:
packet detection means for detecting generation of the packet data;
first transmission start means for, in a state where the transmission start is suspended until the generation of the packet data is detected by the packet detection means and in a case where the generation of the packet data is detected by the packet detection means, controlling the multicode transmission means to start data transmission through a first data channel among the plurality of data channels; and
second transmission start means for, in a case where an amount of the packet data to be transmitted reaches a predetermined transmission start threshold value or more, controlling the multicode transmission means to start data transmission through a second data channel different from the first data channel among the plurality of data channels.

4. A CDMA mobile communication station according to claim 3, wherein the second transmission start means starts the data transmission through the second data channel only in a case where a state in which the amount of the packet data to be transmitted is not smaller than the transmission start threshold value continues throughout a predetermined transmission start time.

5. A CDMA mobile communication station, comprising:
multicode transmission means for transmitting packet data relating to one call in CDMA mobile communication by wireless through a plurality of data channels by sharing predetermined control information;
transmission power control means for controlling transmission power when the packet data is transmitted, on a basis of an instruction to increase or decrease the transmission power from a communication partner station which receives the packet data transmitted by the multicode transmission means; and
transmission stop control means for continuing transmission by the multicode transmission means until the packet data transmitted by the multicode transmission means disappears and for controlling the multicode transmission means in a case where the packet data disappears, so that data transmission through the data channel is stopped at timings shifted from each other by a predetermined time in a unit of the data channel.

6. A CDMA mobile communication station according to claim 5, wherein the transmission stop control means comprises:
packet detection means for detecting that the packet data transmitted by the multicode transmission means disappears;
first transmission stop means for, in a state where the transmission by the multicode transmission means continues until the packet detection means detects that the packet data disappears and in a case where the packet detection means detects that the packet data disappears, controlling the multicode transmission means to stop the data transmission through the first data channel among the plurality of data channels; and
second transmission stop means for controlling the multicode transmission means in response to elapse of a predetermined time from a stop of the data transmission through the first data channel by the first transmission stop means and for stopping the data transmission through the second data channel different from the first data channel among the plurality of data channels.

7. A CDMA mobile communication station according to claim 5, wherein the transmission stop control means comprises:
packet detection means for detecting that the packet data transmitted by the multicode transmission means disappears;
first transmission stop means for, in a state where the transmission by the multicode transmission means continues until the packet detection means detects that the packet data disappears and in a case where the packet detection means detects that the packet data disappears, controlling the multicode transmission means to stop the data transmission through the first data channel among the plurality of data channels; and
second transmission stop means for, in a case where an amount of the packet data to be transmitted reaches a predetermined transmission stop threshold value or less, controlling the multicode transmission means to stop the data transmission through the second data channel different from the first data channel among the plurality of data channels.

8. A CDMA mobile communication station according to claim 7, wherein the second transmission stop means stops the data transmission through the second data channel only in a case where a state in which the amount of the packet data to be transmitted is not larger than the transmission stop threshold value continues throughout a predetermined transmission stop time.

9. A CDMA mobile communication station according to any one claims 2 to 4 and 6 to 8, wherein as the first data channel and/or the second data channel, one or plural channels can be set.

10. A CDMA mobile communication system, comprising:
a first wireless station including multicode transmission means for transmitting packet data relating to one call in CDMA mobile communication by wireless through a plurality of data channels by sharing predetermined control information, and transmission power control means for controlling transmission power when the packet data is transmitted, on a basis of an instruction to increase or decrease the transmission power; and
a second wireless station including reception means for receiving the packet data transmitted by wireless from the first wireless station, and transmission power instruction means for instructing the first wireless station to increase or decrease the transmission power by a predetermined constant value on a basis of power of specific packet data received by the reception means and power of packet data other than the specific packet data received by the reception means,
wherein the first wireless station further comprises transmission start control means for inhibiting a start of transmission by the multicode transmission means until the packet data is generated and for controlling the multicode transmission means in a case where the packet data is generated, so that transmission of the packet data is postponed for a predetermined time in a unit of the data channel and is started.

11. A CDMA mobile communication system, comprising:
a first wireless station including multicode transmission means for transmitting packet data relating to one call in CDMA mobile communication by wireless through a plurality of data channels by sharing predetermined control information, and transmission power control means for controlling transmission power when the packet data is transmitted, on a basis of an instruction to increase or decrease the transmission power; and
a second wireless station including reception means for receiving the packet data transmitted by wireless from the first wireless station, and transmission power instruction means for instructing the first wireless station to increase or decrease the transmission power by a predetermined constant value on a basis of power of specific packet data received by the reception means and power of packet data other than the specific packet data received by the reception means,
wherein the first wireless station further comprises transmission stop control means for continuing transmission by the multicode transmission means until the packet data transmitted by the multicode transmission means disappears and for controlling the multicode transmission means in a case where the packet data disappears, so that data transmission through the data channels is stopped at timings shifted from each other by a predetermined time in a unit of the data channel.

12. A CDMA mobile communication system according to claim 10 or 11, wherein
the first wireless station is a base station,
the second wireless station is a plurality of mobile stations,
the specific packet data is packet data to its own station, and
the packet data other than the specific packet data is packet data to another mobile station.

13. A CDMA mobile communication system according to claim 10 or 11, wherein
the first wireless station is a plurality of mobile stations,
the second wireless station is a base station,
the specific packet data is packet data transmitted from the mobile station connected to a specific call, and
the packet data other than the specific packet data is packet data transmitted from the mobile station connected to a call other than the specific call.

14. A CDMA packet transmission method, wherein when packet data relating to one call in CDMA mobile communication is multicode transmitted by wireless through a plurality of data channels by sharing predetermined control information, transmission is not started until the packet data is generated, and in a case where the packet data is generated, the transmission of the packet data is postponed for a predetermined time in a unit of the data channel and is started.

15. A CDMA packet transmission method, wherein when packet data relating to one call in CDMA mobile communication is multicode transmitted by wireless through a plurality of data channels by sharing predetermined control information, transmission is not stopped until the packet data to be transmitted disappears, and in a case where the packet data disappears, data transmission through the data channels is stopped at timings shifted from each other by a predetermined time in a unit of the data channel.
